(19) Europäisches Patentamt
European Patent Office
Office européen des brevets

(11) **EP 4 503 369 A1**

(12) **EUROPEAN PATENT APPLICATION**
published in accordance with Art. 153(4) EPC

(43) Date of publication:
**05.02.2025 Bulletin 2025/06**

(21) Application number: **22946153.8**

(22) Date of filing: **14.06.2022**

(51) International Patent Classification (IPC):
**H02J 7/00** (2006.01)          **H02J 3/32** (2006.01)

(52) Cooperative Patent Classification (CPC):
**H02J 3/32; H02J 7/00**

(86) International application number:
**PCT/CN2022/098708**

(87) International publication number:
**WO 2023/240454 (21.12.2023 Gazette 2023/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde, Fujian 352100 (CN)**

(72) Inventors:
• **LIANG, Liliuyuan
Ningde, Fujian 352100 (CN)**
• **LU, Yanhua
Ningde, Fujian 352100 (CN)**

• **YU, Dongxu
Ningde, Fujian 352100 (CN)**
• **LI, Meng
Ningde, Fujian 352100 (CN)**
• **WU, Guoxiu
Ningde, Fujian 352100 (CN)**
• **XU, Xiangxiang
Ningde, Fujian 352100 (CN)**
• **LUO, Bingtuan
Ningde, Fujian 352100 (CN)**

(74) Representative: **Ran, Handong et al
Maucher Jenkins
Seventh Floor Offices
Artillery House
11-19 Artillery Row
London SW1P 1RT (GB)**

(54) **CONTROL METHOD AND CONTROL APPARATUS OF ENERGY STORAGE SYSTEM, AND
ENERGY STORAGE SYSTEM**

(57)    Provided in the embodiments of the present application are a control method and a control apparatus of an energy storage system, and an energy storage system. The energy storage system comprises N energy storage modules which are connected in series, N being a positive integer greater than 1. The control method comprises: acquiring a first parameter of each energy storage module in the N energy storage modules, the first parameter being a parameter related to power; and performing equalization control on the energy storage system according to the first parameter of each energy storage module. The control method and the control apparatus provided by the embodiments of the present application may improve the safety and reliability of the energy storage system.

**EP 4 503 369 A1**

20

| Acquiring a first parameter of each energy storage module among the N energy storage modules, the first parameter being a parameter related to power | S21 |

| Conducting balance control on the energy storage system according to the first parameter of each energy storage module | S22 |

FIG. 3

## Description

**TECHNICAL FIELD**

The present application relates to the field of energy storage, in particular to a control method and a control device of an energy storage system and the energy storage system.

**BACKGROUND**

An energy storage system generally comprises a plurality of energy storage modules connected in series. In the manufacturing and using process, there must be inconsistencies of parameters such as voltages, capacities and internal resistance regarding the energy storage modules in the energy storage system, which causes one or more energy storage modules to reach a charging or discharging end more quickly or more slowly than other energy storage modules, and this leads to a phenomenon of performance inconsistencies of the energy storage modules. If no balance management is conducted on batteries, along with charging and discharging cycles, inconsistencies between the energy storage modules may cause under-charging, over-charging and over-discharging, which has a strong impact on usage performance and service life of the energy storage system and may cause serious potential safety hazards.

**SUMMARY**

As a result, the embodiments of the present application provide a control method and a control device of an energy storage system and the energy storage system, which are beneficial to improving safety and reliability of the energy storage system.

In a first aspect, a control method of an energy storage system is provided. The energy storage system comprises N energy storage modules connected in series, and N is a positive integer greater than 1. The control method comprises: acquiring a first parameter of each energy storage module among the N energy storage modules, the first parameter being a parameter related to power; and conducting balance control on the energy storage system according to the first parameter of each energy storage module.

In this embodiment, balance control is conducted on the energy storage system based on the power-related parameter of each energy storage module in the energy storage system. On the one hand, charge-discharge properties between the energy storage modules in the energy storage system can be balanced, and the service life of the energy storage modules can be prolonged. On the other hand, because the parameters related to the power are no longer single-dimension parameters, the parameters may respond to changes in charge-discharge limiting current and thus may reduce limitations to balance control on the energy storage system, thereby being capable of improving reliability of the energy storage system.

In one possible implementation, the conducting balance control on the energy storage system according to the first parameter of each energy storage module comprises: controlling M target energy storage modules among N energy storage modules to be put into the energy storage system, wherein the power of the M target energy storage modules meets a charging and discharging power demand, and M is a positive integer and is less than or equal to N.

In the embodiment, based on the putting the M target energy storage modules among the N energy storage modules meeting the charging and discharging power demand into the energy storage system, limitations of charging and discharging power to balance control may be fully taken into consideration so that the reliability of the energy storage system can be improved.

In one possible implementation, the power of the M target energy storage modules meets the charging and discharging power demand, which comprises: the power of each energy storage module among the M target energy storage modules meets a submodule charging and discharging power demand P1, and/or a sum of the power of the M target energy storage modules meets a system charging and discharging power demand P2.

In the embodiment, the submodule charging and discharging power demand $P_1$ and/or the system charging and discharging power demand $P_2$ are introduced when the M target energy storage modules are determined, limitations of the charging and discharging power to balance control may be fully considered so that the reliability of the energy storage system can be improved.

In one possible implementation, the first parameter comprises a state of power SOP, and the controlling the M target energy storage modules among the N energy storage modules to be put into the energy storage system according to the first parameter of each energy storage module comprises: determining K candidate energy storage modules from the N energy storage modules according to the SOP of each energy storage module, the power of the K candidate energy storage modules meeting the charging and discharging power demand, and K being a positive integer less than or equal to N; determining the M target energy storage modules from the K candidate energy storage modules, M being less than or equal to K; and controlling the M target energy storage modules to be put into the energy storage system.

In the embodiment, because the SOP is introduced as a reference factor of balance control on the energy storage system and is a parameter related to temperatures, effects of the temperatures and the charging and discharging power on balance control may be fully considered, and a whole balance control process of the energy storage system is no longer limited by the charging and discharging power of the single energy storage module.

In one possible implementation, the method also comprises: determining a number n of the energy storage modules to be put into the energy storage system, n being a positive integer less than or equal to N; the determining the M target energy storage modules from the K candidate energy storage modules comprises: determining the M target energy storage modules from the K candidate energy storage modules according to the number n of the energy storage modules to be put into the energy storage system.

In the embodiment, the determining the number of the energy storage modules finally put into the energy storage system based on the number n of the energy storage modules to be put into the energy storage system is beneficial to improving the reliability of the energy storage system.

In one possible implementation, the determining the M target energy storage modules from the K candidate energy storage modules according to the number n of the energy storage modules to be put into the energy storage system comprises: determining the M target energy storage modules from the K candidate energy storage modules based on the state of energy SOE of each energy storage module among the K candidate energy storage modules in the case of n being less than K, and the SOE is a parameter related to the state of health SOH.

In the embodiment, the determining the M target energy storage modules based on the SOE of the energy storage module related to the SOH in the case of K being greater than n is helpful to solve the problems of different aging degrees and large parameter variations of energy storage modules after long-time running, thereby helping to improve the reliability of the energy storage system.

In one possible implementation, the SOE is a parameter related to the SOH and a state of charge SOC.

In one possible implementation, the determining the M target energy storage modules from the K candidate energy storage modules based on a state of energy SOE of each energy storage module among the K candidate energy storage modules in the case of n being less than K comprises: determining n energy storage modules with a minimum SOE among the K candidate energy storage modules to be the M target energy storage modules in the case that n is less than K and the energy storage system is in a charging state, or determining n energy storage modules with a maximum SOE among the K candidate energy storage modules to be the M target energy storage modules in the case that n is less than K and the energy storage system is in a discharging state.

In the embodiment, the putting the n energy storage modules with the minimum SOE among the K candidate energy storage modules into the energy storage system in a charging state or the putting the n energy storage modules with the maximum SOE among the K candidate energy storage modules into the energy storage system in a discharging state can solve the problem of different aging degrees and large parameter variations of energy storage modules after long-time running, thereby being capable of improving the reliability of the energy storage system.

In one possible implementation, the determining the M target energy storage modules from the K candidate energy storage modules according to the number n of the energy storage modules to be put into the energy storage system comprises: determining the K candidate energy storage modules to be the M target energy storage modules in the case of n being greater than or equal to K.

In one possible implementation, the determining the K candidate energy storage modules from the N energy storage modules according to the SOP of each energy storage module comprises: acquiring a sequencing of the power of the N energy storage modules from small to large according to the SOP of each energy storage module; and based on the sequencing, in the case that the power of an ith energy storage module among the N energy storage modules is greater than or equal to the submodule charging and discharging power demand P1 and a sum of the power of (N-i+1) energy storage modules from the ith energy storage module to an Nth energy storage module is greater than or equal to the system charging and discharging power demand P2, determining the ith to Nth energy storage modules to be the K candidate energy storage modules, wherein i is a positive integer, and $1 \leq i \leq N$.

In the embodiment, the M target energy storage modules are acquired by conducting the sequencing on the power of the energy storage modules and judging whether the power of the energy storage modules meets the charging and discharging power demand or not based on the sequencing, the M target energy storage modules can be acquired without judging the power of each energy storage module, operation complexity of a controller can be reduced, and operation efficiency of the controller can be improved.

In one possible implementation, the power of each energy storage module is a product of the SOP of the corresponding energy storage module and a rated power of the corresponding energy storage module, all the energy storage modules among the N energy storage modules have the same rated power, and the acquiring the sequencing of the power of the N energy storage modules from small to large according to the SOP of each energy storage module comprises: acquiring the power of the N energy storage modules from small to large according to the sequencing of the SOPS of the N energy storage modules from small to large.

In the embodiment, the sequencing of the power of the N energy storage modules is acquired according to the sequencing of the SOPs of the N energy storage modules, the sequencing of the power of the N energy storage modules can be acquired without acquiring the power of all the energy storage modules, thereby being capable of further reducing operation complexity of the controller.

In one possible implementation, the control method also comprises: determining a system charging and discharging current demand I and a number n of the energy storage modules to be put into the energy storage system, n being a positive integer less than or equal to N; and determining the submodule charging and discharging power demand P1 and the system charging and discharging power demand P2 according to the system charging and discharging current demand I and the number n of the energy storage modules to be put into the energy storage system.

in one possible implementation, the determining the submodule charging and discharging power demand P1 and the system charging and discharging power demand P2 according to the system charging and discharging current demand I and the number n of the energy storage modules to be put into the energy storage system comprises: determining the submodule charging and discharging power demand P1 and the system charging and discharging power demand P2 according to formulas below: $P1=I*V_{nom}$ and $P2=n*I*V_{nom}$; $V_{nom}$ is a rated voltage of the single energy storage module.

In one possible implementation, the determining the system charging and discharging current demand I and the number n of the energy storage modules to be put into the energy storage system comprises: according to a sum of the power of $(N-i+1)_j$ energy storage modules from an $i_j$th energy storage module to an $N_j$th energy storage module when the power of the $i_j$th energy storage module is greater than or equal to a submodule charging and discharging power demand $P1_j$ and a sum of the power of the $(N-i+1)_j$ energy storage modules is less than a system charging and discharging power demand $P2_j$ in the process of conducting jth balance control on the energy storage system, determining a system charging and discharging current demand $I_j+_1$ and a number $n_{j+1}$ of the energy storage modules to be put into the energy storage system in the process of conducting (j+1)th balance control on the energy storage system, wherein the $i_j$th energy storage module is the ith energy storage module determined in the process of conducting jth balance control on the energy storage system, $P1_j$ is the submodule charging and discharging power demand P1 determined in the process of conducting jth balance control on the energy storage system, the $N_j$th energy storage module is the Nth energy storage module determined in the process of conducting jth balance control on the energy storage system, the system charging and discharging power demand $P2_j$ is the system charging and discharging power demand P2 in the process of conducting jth balance control on the energy storage system, the $(N-i+1)_j$ energy storage modules are the (N-i+1) energy storage modules determined in the process of conducting jth balance control on the energy storage system, the system charging and discharging

current demand $I_j+_1$ is the system charging and discharging current demand I determined in the process of conducting (j+1)th balance control on the energy storage system, the number $n_{j+1}$ of the energy storage modules to be put into the energy storage system is the number n of the energy storage modules to be put into the energy storage system determined in the process of conducting (j+1)th balance control on the energy storage system, and j is a positive integer.

In the embodiment, the determining the system charging and discharging current demand I and the number n of the energy storage modules to be put into the energy storage system in a latter balance control process according to the power of the energy storage module in a former balance control process is beneficial to further improving reliability of balance control on the system.

In one possible implementation, the SOE is determined based on formulas below: $SOE=(1-SOC)*SOH*C_{nom}*V_{nom}$ when the energy storage system is in a charging state; $SOE=SOC*SOH*C_{nom}*V_{nom}$ when the energy storage system is in a discharging state, wherein $C_{nom}$ is a rated capacity of the single energy storage module, and $V_{nom}$ is a rated voltage of the single energy storage module.

In one possible implementation, the acquiring the first parameter of each energy storage module among the N energy storage modules comprises: determining the SOP of each energy storage module according to a temperature and a state of charge SOC of each energy storage module.

In the embodiment, the SOP of the energy storage module is determined based on the temperature and the SOC of the energy storage module, and the final M target energy storage modules are determined based on the SOP of the energy storage module, i.e., both the SOC and the temperature are considered in the process of conducting balance control on the energy storage system, thereby avoiding the problem that balance control on the energy storage system is limited due to the fact that the energy storage system cannot respond to changes of charging and discharging limiting currents. Thus, a utilization rate of the energy storage system can be improved.

In a second aspect, a control device of an energy storage system is provided. The energy storage system comprises N energy storage modules connected in series, and N is a positive integer greater than 1. The control device comprises: an acquisition unit configured to acquire a first parameter of each energy storage module among the N energy storage modules, the first parameter being a parameter related to the power; and a control unit configured to conduct balance control on the energy storage system according to the first parameter of each energy storage module.

In one possible implementation, the control unit is specifically configured to: control M target energy storage modules among the N energy storage modules to be put into the energy storage system according to the first parameter of each energy storage module, wherein the power of the M target energy storage modules meets a charging and discharging power demand, and M is a positive integer.

In one possible implementation, the power of the M target energy storage modules meets the charging and discharging power demand, which comprises: the power of each energy storage module among the M target energy storage modules meets a submodule charging and discharging power demand P1, and/or a sum of the power of the M target energy storage modules meets a system charging and discharging power demand P2.

In one possible implementation, the first parameter comprises a state of power SOP, and the control unit specifically comprises: a determination subunit configured to determine the K candidate energy storage modules from the N energy storage modules according to the SOP of each energy storage module, the power of the K candidate energy storage modules meeting a charging and discharging power demand, and K being a positive integer, and determine the M target energy storage modules from the K candidate energy storage modules; and a control subunit configured to control the M target energy storage modules to be put into the energy storage system.

In one possible implementation, the control device also comprises: a determination unit configured to determine the number n of the energy storage modules to be put into the energy storage system, n being a positive integer less than or equal to N; the determination subunit is specifically configured to: determine the M target energy storage modules from the K candidate energy storage modules according to the number n of the energy storage modules to be put into the energy storage system.

In one possible implementation, the determination subunit is configured to determine the M target energy storage modules from the K candidate energy storage modules based on a state of energy SOE of each energy storage module among the K candidate energy storage modules in the case that n is less than K, wherein the SOE is a parameter related to a state of health SOH.

In one possible implementation, the SOE is a parameter related to the SOH and a state of charge SOC.

In one possible implementation, the determination subunit is specifically configured to determine n energy storage modules with a minimum SOE among the K candidate energy storage modules to be the M target energy storage modules in the case that n is less than K and the energy storage system is in a charging state, or determine n energy storage modules with a maximum SOE among the K candidate energy storage modules to be the M target energy storage modules in the case that n is less than K and the energy storage system is in a discharging state.

In one possible implementation, the determination subunit is specifically configured to determine the K candidate energy storage modules to be the M target energy storage modules in the case that n is greater than or equal to K.

Optionally, in the embodiment of the present application, the determination subunit is specifically configured to: acquire a sequencing of the power of the N energy storage modules from small to large according to the SOP of each energy storage module; and determine ith to Nth energy storage modules to be the K candidate energy storage modules based on the sequencing in the case that the power of an ith energy storage module among the N energy storage modules is greater than or equal to a submodule charging and discharging power demand P1 and a sum of the power of $(N-i+1)$ energy storage modules from the ith energy storage module to an Nth energy storage module is greater than or equal to a system charging and discharging power demand P2, wherein i is a positive integer, and $1 \leq i \leq N$.

In one possible implementation, the power of each energy storage module is a product of the SOP of the corresponding energy storage module and a rated power of the corresponding energy storage module, all the energy storage modules among the N energy storage modules have the same rated voltage, and the determination subunit is specifically configured to acquire a sequencing of the power of the N energy storage modules from small to large according to the sequencing of the SOPs of the N energy storage modules.

In one possible implementation, the control device further comprises: a determination unit configured to determine a system charging and discharging current demand I and a number n of the energy storage modules to be put into the energy storage system, n being a positive integer less than or equal to N; and determine the submodule charging and discharging power demand P1 and the system charging and discharging power demand P2 according to the system charging and discharging current demand I and the number n of the energy storage modules to be put into the energy storage system.

In one possible implementation, the determination unit is specifically configured to determine the submodule charging and discharging power demand P1 and the system charging and discharging power demand P2 according to formulas below: $P1 = I \ast V_{nom}$ and $P2 = n \ast I \ast V_{nom}$; $V_{nom}$ is a rated voltage of the single energy storage module.

In one possible implementation, the determination unit is specifically configured to determine the system charging and discharging current demand $I_j+_1$ and the number $n_{j+1}$ of the energy storage modules to be put into the energy storage system in the process of conducting (j+1)th balance control on the energy storage system according to a sum of the power of $(N-i+1)_j$ energy storage modules from the $i_j$th energy storage module to an $N_j$th energy storage module when the power of the $i_j$th energy storage module is greater than or equal to a submodule charging and discharging power demand

$P1_j$ and a sum of the power of the $(N-i+1)_j$ energy storage modules is less than a system charging and discharging power demand $P2_j$ in the process of conducting jth balance control on the energy storage system, wherein the $i_j$th energy storage module is the ith energy storage module determined in the process of conducting jth balance control on the energy storage system, $P1_j$ is the submodule charging and discharging power demand P1 determined in the process of conducting jth balance control on the energy storage system, the $N_j$th energy storage module is the Nth energy storage module determined in the process of conducting jth balance control on the energy storage system, a system charging and discharging power demand $P2_j$ is the system charging and discharging power demand P2 in the process of conducting jth balance control on the energy storage system, the $(N-i+1)_j$ energy storage modules are the (N-i+1) energy storage modules determined in the process of conducting jth balance control on the energy storage system, the system charging and discharging current demand $I_{j+1}$ is the system charging and discharging current demand I determined in the process of conducting (j+1)th balance control on the energy storage system, the number $n_{j+1}$ of the energy storage modules to be put into the energy storage system is the number n of the energy storage modules to be put into the energy storage system determined in the process of conducting (j+1)th balance control on the energy storage system, and j is a positive integer.

In one possible implementation, the SOE is determined based on formulas below: SOE=(1-SOC)*SOH*$C_{nom}$*$V_{nom}$ when the energy storage system is in a charging state; SOE=SOC*SOH*$C_{nom}$*$V_{nom}$ when the energy storage system is in a discharging state, wherein $C_{nom}$ is a rated capacity of the single energy storage module, and $V_{nom}$ is a rated voltage of the single energy storage module.

In a third aspect, an energy storage system is provided, comprising N energy storage modules connected in series and the control device in the second aspect and any one of the possible implementations in the second aspect.

In one possible implementation, the energy storage system is a high-voltage direct-current direct-mounted energy storage system.

In a fourth aspect, a control device of an energy storage system is provided. The energy storage system comprises N energy storage modules connected in series, and N is a positive integer greater than 1. The control device comprises a memory and a processor. The memory is configured to store instructions. The processor is configured to read the instructions and perform the method in the first aspect and any one of the possible implementations in the first aspect.

In a fifth aspect, a chip is provided, comprising a processor configured to call a computer program from the memory and run the computer program to enable a device provided with the chip to perform the method in the first aspect and any one of the possible implementations in the first aspect.

In a sixth aspect, a computer program is provided, wherein the computer program enables a computer to perform the method in the first aspect and any one of the possible implementations in the first aspect.

In a seventh aspect, a computer-readable storage medium is provided, wherein the computer-readable storage medium is used for storing a computer program, and the computer program enables the computer to perform the method in the first aspect and any one of the possible implementations in the first aspect.

In an eighth aspect, a computer program product is provided, wherein the computer program product comprises a computer program instruction which enables the computer to perform the method in the first aspect and any one of the possible implementations in the first aspect.

**DESCRIPTION OF THE DRAWINGS**

To more clearly illustrate the technical solutions of the embodiments of the present application, the accompanying drawings required by the embodiments of the present application are introduced briefly below, it is obvious that the accompanying drawings depicted below are merely some examples of the present application, for those skilled in the art, they can also obtain other accompanying drawings based on the accompanying drawings without paying creative work.

FIG. 1 is a schematic structural diagram of a direct-current energy storage system according to the embodiment of the present application.
FIG. 2a is a schematic structural diagram of an energy storage module in FIG. 1.
FIG. 2b is a schematic structural diagram of an energy storage module in FIG. 1.
FIG. 3 is a schematic block diagram of a control method of an energy storage system according to an embodiment of the present application.
FIG. 4 is another schematic block diagram of the control method of the energy storage system according to an embodiment of the present application.
FIG. 5 is yet another schematic block diagram of the control method of the energy storage system according to an embodiment of the present application.
FIG. 6 is yet another schematic block diagram of the control method of the energy storage system according to an embodiment of the present application.
FIG. 7 is yet another schematic block diagram of the control method of the energy storage system according to an embodiment of the present application.
FIG. 8 is a schematic flow diagram of a control method of an energy storage system according to an embodiment of the present application.
FIG. 9 is a schematic block diagram of a control device of an energy storage system according to an embodiment of the present application.

FIG. 10 is another schematic block diagram of the control device of the energy storage system according to an embodiment of the present application.

## DESCRIPTION OF EMBODIMENTS

The technical solution in the embodiment of the present application will be clearly and completely described below in conjunction with the accompanying drawings in the embodiment of the present application. Obviously, the described embodiments are only a part of the embodiments of the present application, but not all of the embodiments. Based on the embodiments of the present application, all other embodiments obtained by those of ordinary skill in the art without creative work are within the scope of protection of the present application.

Unless otherwise defined, all technical and scientific terms used in the present application have the same meaning as commonly understood by those skilled in the art to which the present application pertains. The terms used in the description of the present application are to describe specific embodiments only and are not intended to limit the present application. The terms "including" and "having" and any variations thereof in the specification and claims of the present application and the above brief description of the drawings are intended to cover a non-exclusive inclusion. The terms "first", "second", and so on in the description and claims or accompanying drawings of the present application are intended to distinguish different objects, but not to describe particular sequences or primary-secondary relationships.

"Embodiments" mentioned in the present application mean that specific features, structures or features described in conjunction with embodiments can be comprised in at least one embodiment of the present application. The phrases appearing at positions of the description do not necessarily indicate the same embodiment and it is not an exclusively independent or alternative embodiment of other embodiments. Those skilled in the art understand implicitly and explicitly that the embodiments described in the present application can be combined with other embodiments.

In the description of the present application, it should be noted that unless otherwise expressly specified and limited, the terms "connected" and "attached" can be directly connected or indirectly connected through an intermediate medium, and can be an internal communication between two components. The specific meanings of the above terms in the present application may be understood by those of ordinary skill in the art depending on specific circumstances.

The term "and/or" in the present application is only an association relationship describing an association object, indicating that there may be three relationships, for example, A and/or B may indicate that A exists alone, A and B exist simultaneously, and B exists alone.

In addition, the character "/" in the present application generally indicates an alternative relationship between the front and back associated objects.

The energy storage system according to the embodiment of the present application is formed by a plurality of energy storage modules and other auxiliary devices connected in series. Each energy storage module among the plurality of energy storage modules may comprise at least one energy storage element. The energy storage element may have many implementations, for example, a battery, a super-capacitor, a flywheel energy storage, a gas compression energy storage or any combination thereof. In addition, other known devices capable of storing electric energy in this field can be chosen.

Generally, in the manufacturing and using process, there must be inconsistencies of parameters such as voltages, capacities and internal resistance regarding the energy storage modules in the energy storage system, which always causes charge-discharge properties of one or more energy storage modules to be quicker or slower than other energy storage modules, and this leads to a phenomenon of inconsistencies. With a gradual increase of inconsistencies between the energy storage modules in the using process, performance degradation of some energy storage modules is sped up to influence the service life of the energy storage modules. Thus, balance control is usually required for the energy storage modules in the energy storage system, i.e., in a charging and discharging process, putting-in and splitting of the energy storage modules in the energy storage system are controlled to balance charge-discharge properties between the energy storage modules.

At present, dynamic balance of the whole energy storage system is realized mainly based on a sequencing of states of charge SOC of the energy storage modules, i.e., putting-in or splitting of the energy storage modules are controlled according to the sequencing of the SOCs of the energy storage modules. Under a system charging condition, the energy storage module with a low SOC is put in first, and the energy storage module with a high SOC is split; under a system discharging condition, the energy storage module with the high SOC is put in first, and the energy storage module with the low SOC is split, thereby realizing dynamic balance of the whole energy storage system finally.

However, a lot of problems still exist in practical applications of the single-dimension balance control method. For example, a battery charge-discharge limiting current is related to temperature, at an extremely high temperature or low temperature, the battery charge-discharge limiting current can decrease rapidly, and because the SOC-based sequencing of the energy storage modules cannot respond to changes of the charge-discharge limiting current, balance control on the system is limited. For another example, after long-time running, different aging degrees and large parameter variations of the energy storage modules can also limit balance control on the energy storage system.

As a result, the embodiment of the present application provides a control method of an energy storage system. Based on power-related parameters of energy storage modules in the energy storage system, balance control is conducted on the energy storage system, the power-related parameters are no longer single-dimension parameters, which may respond to changes in the charge-discharge limiting current, thereby being capable of reducing limitations to balance control on the system and improving reliability of the energy storage system.

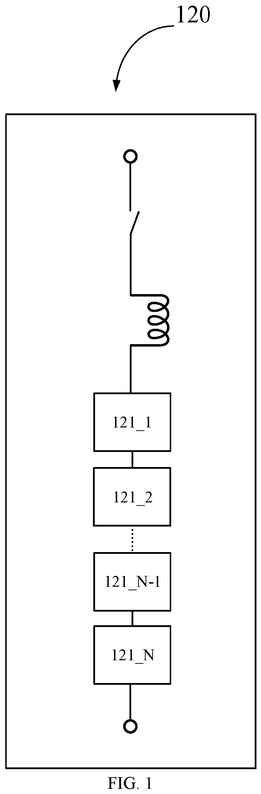

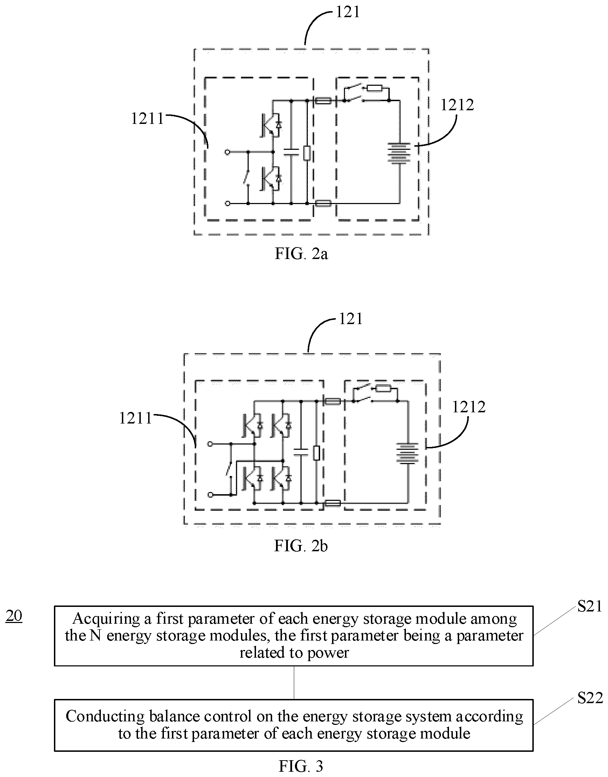

FIG. 1 is a schematic architecture diagram of a direct-current direct-mounted energy storage system according to the embodiment of the present application. As shown in FIG. 1, the direct-current direct-mounted energy storage system 120 comprises N energy storage modules 121 (121_1, 121_2, ... 121_N) connected in series, wherein each energy storage module 121 may be formed by a power submodule 1211 in parallel connection with a battery module 1212. Specifically, the power submodule 1211 may be a half-bridge power submodule shown in FIG. 2a and may also be a full-bridge power submodule shown in FIG. 2b. The battery submodule 1212 may be a single-branch series connection battery submodule and may also be a multi-branch parallel connection battery submodule.

FIG. 3 is a schematic block diagram of a control method 20 of an energy storage system according to an embodiment of the present application. The energy storage system may comprise N energy storage modules connected in series, and N is a positive integer greater than 1. Optionally, the control method 20 may be performed by a control system in the high-voltage direct-current direct-mounted energy storage system shown in FIG. 1. Specifically, as shown in FIG. 3, the control method 20 may include a portion of or all of the following steps:

    S21, acquiring a first parameter of each energy storage module among the N energy storage modules, the first parameter being a parameter related to the power; and
    S22, conducting balance control on the energy storage system according to the first parameter of each energy storage module.

It should be understood that parameters related to the power may be parameters directly or indirectly representing the power. For example, the first parameter may be the power. For another example, the first parameter may be a state of power (SOP).

In this embodiment, balance control is conducted on the energy storage system based on the power-related parameter of each energy storage module in the energy storage system. On the one hand, charge-discharge properties between the energy storage modules in the energy storage system can be balanced, and the service life of the energy storage modules can be prolonged. On the other hand, because the parameters related to the power are no longer single-dimension parameters, the parameters may respond to changes in charge-discharge limiting current and thus may reduce limitations to balance control on the energy storage system, thereby being capable of improving reliability of the energy storage system.

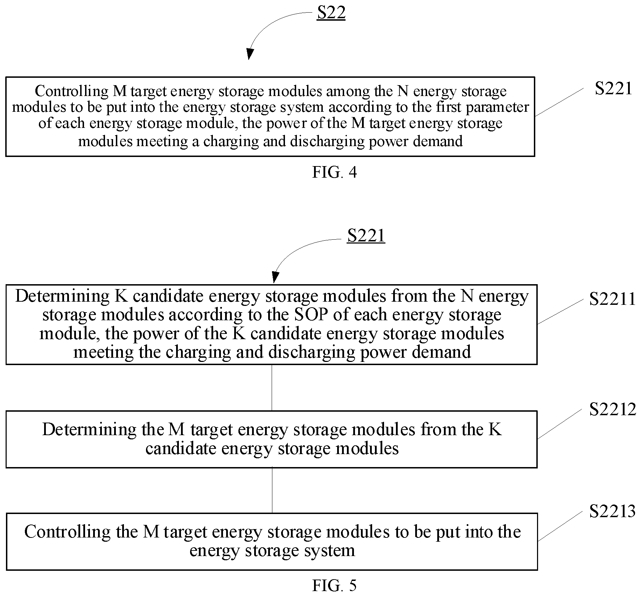

Optionally, as shown in FIG. 4, Step S22 may include: S221, controlling M target energy storage modules among the N energy storage modules to be put into the energy storage system according to the first parameter of each energy storage module, wherein the power of the M target energy storage modules meets a charging and discharging power demand, and M is a positive integer less than or equal to N.

It should be noted that putting-in of an energy storage module means that the energy storage module is connected to the energy storage system, i.e., a power submodule in the energy storage module is connected. Correspondingly, splitting of the energy storage module means that the energy storage module is not connected to the energy storage system, i.e., the power submodule in the energy storage module is disconnected.

In general, before charging and discharging of the energy storage system, a controller may acquire various demands in a charging and discharging process in advance, including a charging and discharging power demand. Because the first parameter refers to a parameter related to the power, the power of a corresponding energy storage module may be acquired through the first parameter. In other words, in the embodiment of the present application, after acquiring the first parameter of each energy storage module, the power of each energy storage module may be acquired, and then M target energy storage modules meeting the charging and discharging power demand among the N energy storage modules may be determined. For example, if the first parameter is power, the M target energy storage modules meeting the charging and discharging power demand may be determined directly based on the first parameter of each energy storage module. For another example, if the first parameter is the SOP, the power of each energy storage module may be determined based on the SOP of each energy storage module first, and then the M target energy storage modules meeting the charging and discharging power demand may be determined.

In the embodiment, by putting the M target energy storage modules meeting the charging and discharging power demand among the N energy storage modules into the energy storage system, limitations of charging and discharging power to balance control may be reduced, thereby being capable of improving reliability of the energy storage system.

If the first parameter is the power, the power of the energy storage module may be determined by the SOP and may also be determined in other ways. For example, the power of the energy storage module may be determined by current and voltage. Power acquisition ways of the energy storage module are not limited in the embodiment of the present application.

Optionally, in the embodiment of the present application, the power of the M target energy storage modules meets the charging and discharging power demand, which comprises: the power of each energy storage module among the M target energy storage modules meets a submodule charging and discharging power demand P1, and/or a sum of the power of the M target energy storage modules meets a system charging and discharging power demand P2.

As mentioned above, before charging and discharging of the energy storage system, the controller may acquire the charging and discharging power demand in advance, which may include the charging and discharging power demand of a single energy storage module, here called a submodule charging and discharging power demand P1, and may also include the charging and discharging power demand of the energy storage system, here called a system charging and discharging power demand P2. After acquiring the charging and discharging power demand, the controller may further acquire the M target energy storage modules meeting the charging and discharging power demand from the N energy storage modules. For example, the controller may compare the power of each energy storage module among the N energy storage modules to the submodule charging and discharging power demand P1 and determine the M energy storage modules with the power greater than or equal to the submodule charging and discharging power demand P1 to be the M target energy storage modules. For another example, the controller may compare a sum of the power of the M energy storage modules among the N energy storage modules to the system charging and discharging power demand P2 and determine the M energy storage modules to be the M target energy storage modules in the case that the sum of the power of the M energy storage modules is greater than or equal to the system charging and discharging power demand P2. For another example, the determined M target energy storage modules should meet the conditions: the power of each energy storage module among the M energy storage modules meets the submodule charging and discharging power demand P1 and the sum of the power of the M energy storage modules meets the system charging and discharging power demand P2.

In the embodiment, the submodule charging and discharging power demand P1 and/or the system charging and discharging power demand P2 are introduced when the M target energy storage modules are determined, and limitations of the charging and discharging power to balance control can be reduced, thereby being capable of improving the reliability of the energy storage system.

Optionally, the first parameter comprises a state of power SOP. As shown in FIG. 5, Step S221 may include a portion of or all of the following steps:

S2211, determining the K candidate energy storage modules from the N energy storage modules according to the SOP of each energy storage module, wherein the power of the K candidate energy storage modules meets the charging and discharging power demand, and K is a positive integer less than or equal to N;

S2212, determining the M target energy storage modules from the K candidate energy storage modules, M being less than or equal to K; and

S2213, controlling the M target energy storage modules to be put into the energy storage system.

In other words, the controller may determine a candidate scope based on the SOP and then determine the M target energy storage modules finally put into the energy storage system from the candidate scope.

In the embodiment, because the SOP is introduced as a reference factor of balance control on the energy storage system and usually is a parameter related to temperatures, effects of the temperatures and the charging and discharging power on balance control may be fully considered, and a whole balance control process of the energy storage system is no longer limited by the charging and discharging power of the single energy storage module.

In one example, the acquiring the first parameter of each energy storage module among the N energy storage modules comprises: determining the SOP of each energy storage module according to the temperature and the SOC of each energy storage module.

Specifically, a mapping table of SOP, temperature and SOC may be stored in the controller. When acquiring the temperature and the SOC of the energy storage module, the controller may look up the mapping table to acquire a corresponding SOP.

In the embodiment, the SOP of the energy storage module is determined based on the temperature and the SOC of the energy storage module, and the final M target energy storage modules are determined based on the SOP of the energy storage module, i.e., both the SOC and the temperature are considered in the process of conducting balance control on the energy storage system, thereby avoiding the problem that balance control on the energy storage system is limited due to the fact that the energy storage system cannot respond to changes of charging and discharging limiting currents. Thus, a utilization rate of the energy storage system can be improved.

In other examples, the SOP may also be related to other parameters. For example, the SOP may be related to a state of health (SOH), which is not limited in the embodiment of the present application.

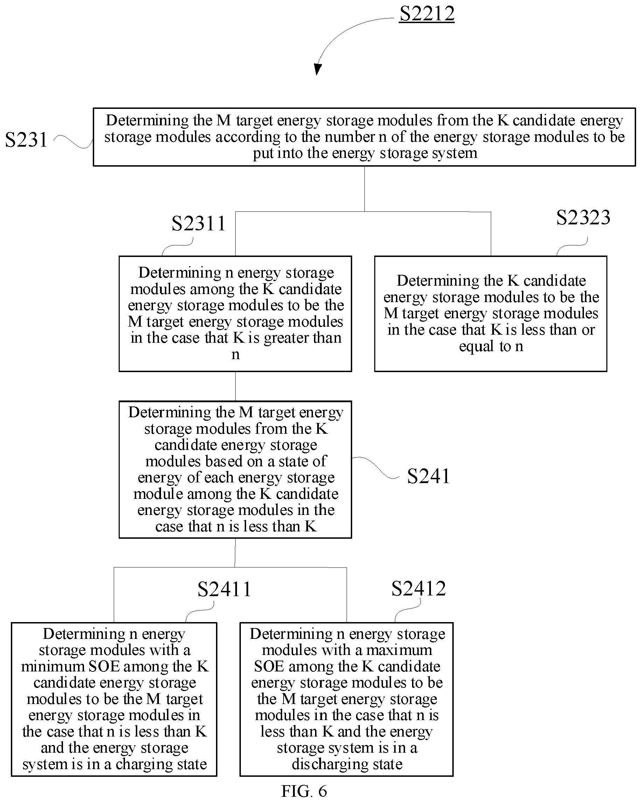

Optionally, in the embodiment of the present application, the control method 20 also includes: determining a number n of the energy storage modules to be put into the energy storage system, n being a positive integer less than or equal to N; further, as shown in FIG. 6, Step S2212 may include: S231, determining the M target energy storage modules from the K candidate energy storage modules according to the number n of the energy storage modules to be put into the energy storage system.

In addition to the charging and discharging power demand, various demands acquired by the controller in advance in the charging and discharging process may also include the number n of the energy storage modules to be put into the energy storage system. In other words, in addition to the charging and discharging power demand, the M target energy storage modules determined from the K candidate energy storage modules have to meet the number n of the energy storage modules to be put into the energy storage system. M should be less than or equal to n.

In an example, Step S231 may include: S2311, determining n energy storage modules among the K candidate energy storage modules to be the M target energy storage modules in the case of K greater than n. In another example, Step S231 may include: S2312, determining the K candidate energy storage modules to be the M target energy storage modules in the case of K being less than or equal to n.

In the embodiment, the determining the number of the energy storage modules finally put into the energy storage system based on the number n of the energy storage modules to be put into the energy storage system is beneficial to improving the reliability of the energy storage system.

See FIG.6, Step S2311 may include: S241, determining the M target energy storage modules from the K candidate energy storage modules based on a state of energy (SOE) of each energy storage module among the K candidate energy storage modules, wherein the SOE is a parameter related to a state of health SOH.

In the embodiment, the determining the M target energy storage modules further based on the SOE of the energy storage modules related to the SOH in the case of K being greater than n is helpful to solve the problems of different aging degrees and large parameter variations of energy storage modules after long-time running, thereby helping to improve the reliability of the energy storage system.

In one possible example, the SOE may be the SOH.

In other possible examples, the SOE is a parameter related to the SOH and the SOC.

For example, when the energy storage system is in a charging state, $SOE=(1-SOC)*SOH*C_{nom}*V_{nom}$. For another example, when the energy storage system is in a discharging state, $SOE=SOC*SOH*C_{nom}*V_{nom}$, wherein $C_{nom}$ is a rated capacity of a single energy storage module, and $V_{nom}$ is a rated voltage of the single energy storage module. Under normal conditions, rated capacities of different energy storage modules in the same energy storage system are the same, and rated voltages of different energy storage modules in the same energy storage system are the same. In other words, in the process of computing the SOE, only the SOC and the SOH are variables, and the rest are constants. However, those skilled in the art should understand that the technical solutions in the present application do not exclude the embodiments in which the rated capacities of the different energy storage modules in the same energy storage system are different, and/or the rated voltages of the different energy storage modules in the same energy storage system are different. In other words, in the process of computing the SOE, $C_{nom}$ and/or $V_{nom}$ may also be variables in addition to the SOC and the SOH being variables.

In other examples, the SOE is related to the SOH and is also related to combinations of various parameters such as SOC, temperature, power, voltage and current, which is not limited in the embodiment of the present application.

See FIG. 6, Step S241 may include: S2411, determining n energy storage modules with a minimum SOE among the K candidate energy storage modules to be the M target energy storage modules in the case that n is less than K and the energy storage system is in a charging state; or S2412, determining n energy storage modules with a maximum SOE among the K candidate energy storage modules to be the M target energy storage modules in the case that n is less than K and the energy storage system is in a discharging state.

In other words, a sequencing may be conducted on the SOEs of the K candidate energy storage modules after the K candidate energy storage modules are determined from the N energy storage modules. For example, the sequencing may be conducted on the K candidate energy storage modules from large to small. In a charging state, the latter n energy storage modules may be determined to be the M target energy storage modules. In a discharging state, the former n energy storage modules may be determined to be the M target energy storage modules. In another example, a sequencing may be conducted on the K candidate energy storage modules from small to large. Now in a charging state, the former n energy storage modules may be determined to be the M target energy storage modules. In a discharging state, the latter n energy storage modules may be determined to be the M target energy storage modules.

In the embodiment, the putting the n energy storage modules with the minimum SOE among the K candidate energy storage modules into the energy storage system in a charging state or the putting the n energy storage modules with the maximum SOE among the K candidate energy storage modules into the energy storage system in a discharging state can solve the problem of different aging degrees and large parameter variations of energy storage modules after long-time running, thereby being capable of improving the reliability of the energy storage system.

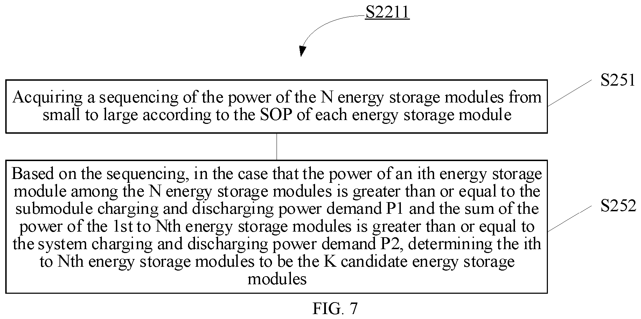

Optionally, as shown in FIG. 7, Step S2211 may include: S251, acquiring a sequencing of the power of the N energy storage modules from small to large according to the SOP of each energy storage module; and S252, based on the sequencing, in the case that the power of an ith energy storage module among the N energy storage modules is greater than or equal to a submodule charging and discharging power demand P1 and a sum of the power of (N-i+1) energy storage modules from the ith energy storage module to the Nth energy storage module is greater than or equal to a system charging and discharging power demand P2, determining the ith to Nth energy storage modules to be the K candidate energy storage modules, wherein i is a positive integer, and $1 \leq i \leq N$.

In one example, the power of a corresponding energy storage module may be acquired based on the SOP of each energy storage module first. Further, a sequencing is conducted on the power of the N energy storage modules from small to large. In other examples, if the SOP of the energy storage module is in direct proportion to the power of the energy storage module, the sequencing from small to large may be conducted on the SOPs of the N energy storage modules to acquire a sequencing of the power of the N energy storage modules from small to large.

Specifically, after acquiring the sequencing of the power of the N energy storage modules, whether the power of each energy storage module is greater than or equal to the submodule charging and discharging power demand P1 or not may be judged in sequence based on the sequencing. Once it is determined that the power of some energy storage module is greater than or equal to the submodule charging and discharging power demand P1, judgment on the power of other energy storage modules can be abandoned. In other words, the power of all the energy storage modules after the energy storage module may be greater than or equal to the submodule charging and discharging power demand P1 by default. Further, whether a sum of the power of all the energy storage modules (including the energy storage modules at two ends) between a first energy storage module with the power greater than or equal to the submodule charging and discharging power demand P1 and a final energy storage module is greater than or equal to the system charging and discharging power demand P2 or not may be judged. Once it is judged yes, the first energy storage module with the power greater than or equal to the submodule charging and discharging power demand P1 and all the latter energy storage modules may be determined to be the M target energy storage modules.

In the embodiment, the M target energy storage modules are acquired by conducting the sequencing on the power of the energy storage modules and judging whether the power of the energy storage modules meets the charging and discharging power demand or not based on the sequencing, the M target energy storage modules can be acquired without judging the power of each energy storage module, operation complexity of a controller can be reduced, and operation efficiency of the controller can be improved.

As mentioned above, if the SOP of the energy storage module is in direct proportion to the power of the energy storage module, the sequencing of the SOPs of the N energy storage modules is the sequencing of the power of the N energy storage modules. Optionally, the power of each energy storage module among the N energy storage modules may be set to be a product of the SOP of a corresponding energy storage module and a rated power of the corresponding energy storage module, i.e. For the ith energy storage module among the N energy storage modules, the power of the ith energy storage module is $P_i = SOP_i * P_{nom}$, wherein $SOP_i$ is the SOP of the ith energy storage module, and $P_{nom}$ is the rated power of the energy storage module. It should be noted that different energy storage modules in the same energy storage system usually have the same $P_{nom}$. However, those skilled in the art should understand that the technical solutions in the present application do not exclude the embodiments in which the rated power of the different energy storage modules in the same energy storage system is different.

In the embodiment, the sequencing of the power of the N energy storage modules is acquired according to the sequencing of the SOPs of the N energy storage modules, the sequencing of the power of the N energy storage modules can be acquired without acquiring the power of all the energy storage modules, thereby being capable of further reducing operation complexity of the controller.

Optionally, in the embodiment of the present application, the control method 20 also includes: determining a system charging and discharging current demand I and a number n of the energy storage modules to be put into the energy storage system, n being a positive integer less than or equal to N; and determining a submodule charging and discharging power demand P1 and a system charging and discharging power demand P2 according to the system charging and discharging current demand I and the number n of the energy storage modules to be put into the energy storage system.

As mentioned above, various demands acquired by the controller in advance in the charging and discharging process may include the number n of the energy storage modules be put into the energy storage system and may also include the system charging and discharging current demand I. Further, the controller may determine the submodule charging and discharging power demand P1 and the system charging and discharging power demand based on the number n of the energy storage modules to be put into the energy storage system and the system charging and discharging current demand I.

Further optionally, the determining the submodule charging and discharging power demand P1 and the system charging and discharging power demand P2 according to the system charging and discharging current demand I and the number n of the energy storage modules to be put into the energy storage system comprises: determining the submodule charging and discharging power demand P1 and the system charging and discharging power demand P2 according to formulas below: $P1=I*V_{nom}$ and $P2=n*I*V_{nom}$; $V_{nom}$ is a rated voltage of a single energy storage module,

wherein P1. P2 and $V_{nom}$ may refer to the above descriptions and are not described in detail for brevity.

Optionally, in the embodiment of the present application, the determining the system charging and discharging current demand I and the number n of the energy storage modules to be put into the energy storage system comprises: determining a system charging and discharging current demand $I_{j+1}$ and a number $n_{j+1}$ of the energy storage modules to be put into the energy storage system in the process of conducting (j+1)th balance control on the energy storage system according to a sum of the power of $(N-i+1)_j$ energy storage modules from an $i_j$th energy storage module to an $N_j$th energy storage module when the power of the $i_j$th energy storage module is greater than or equal to a submodule charging and discharging power demand $P1_j$ and a sum of the power of the $(N-i+1)_j$ energy storage modules is less than a system charging and discharging power demand $P2_j$ in the process of conducting jth balance control on the energy storage system, wherein the $i_j$th energy storage module is the ith energy storage module determined in the process of conducting jth balance control on the energy storage system, $P1_j$ is the submodule charging and discharging power demand P1 determined in the process of conducting jth balance control on the energy storage system, the $N_j$th energy storage module is the Nth energy storage module determined in the process of conducting jth balance control on the energy storage system, the system charging and discharging power demand $P2_j$ is the system charging and discharging power demand P2 in the process of conducting jth balance control on the energy storage system, the $(N-i+1)_j$ energy storage modules are the (N-i+1) energy storage modules determined in the process of conducting jth balance control on the energy storage system, the system charging and discharging current demand $I_j+_1$ is the system charging and discharging current demand I determined in the process of conducting (j+1)th balance control on the energy storage system, the number $n_{j+1}$ of the energy storage modules to be put into the energy storage system is the number n of the energy storage modules to be put into the energy storage system determined in the process of conducting (j+1)th balance control on the energy storage system, and j is a positive integer.

As mentioned above, after conducting the sequencing on the power of the N energy storage modules, whether the power of each energy storage module is greater than or equal to the submodule charging and discharging power demand P1 or not may be judged in sequence. In the case of judging that the power of some energy storage module is greater than or equal to the submodule charging and discharging power demand P1, whether a sum of the power of the energy storage module and the power of all the latter energy storage modules is greater than or equal to the system charging and discharging power demand P2 or not can be further judged. However, in the case of judging that the power of some energy storage module is less than the submodule charging and discharging power demand P1, whether the power of a next energy storage module is less than the submodule charging and discharging power demand P1 or not can continue to be judged. In the case of judging that the power of some energy storage module is greater than or equal to the submodule charging and discharging power demand P1 and the sum of the power of the energy storage module and the power of all the latter energy storage modules is less than the system charging and discharging power demand P2, power reduction charge and discharge control may be conducted on the energy storage system. For example, when the controller begins to judge from the power of a 1st energy storage module until the power of an ith energy storage module is greater than or equal to a submodule charging and discharging power demand P1, continue to judge that a sum of the power of (N-i+1) energy storage modules from the ith energy storage module to an Nth energy storage module is less than or equal to a system charging and discharging power demand P2, a system charging and discharging power demand P2 in a next balance control process may be determined to be a sum of the power of the (N-i+1) energy storage modules from the ith energy storage module to the Nth energy storage module. Furthermore, a system charging and discharging current demand I and a number n of the energy storage modules to be put into the energy storage system in the next balance control process are determined according to the system charging and discharging power demand P2 in the next balance control process.

In other words, various demands acquired by the controller in advance in the charging and discharging process are periodically updated. The controller may conduct balance control on the energy storage system by adopting the above embodiments based on the updated demands, i.e., as long as the demands in the controller are updated, the controller conducts balance control on the energy storage system by adopting the technical solutions according to an embodiment of the present application.

In the embodiment, the determining the system charging and discharging current demand I and the number n of the energy storage modules to be put into the energy storage system in a latter balance control process according to the power of the energy storage modules in a former balance control process is beneficial to further improving reliability of balance control on the system.

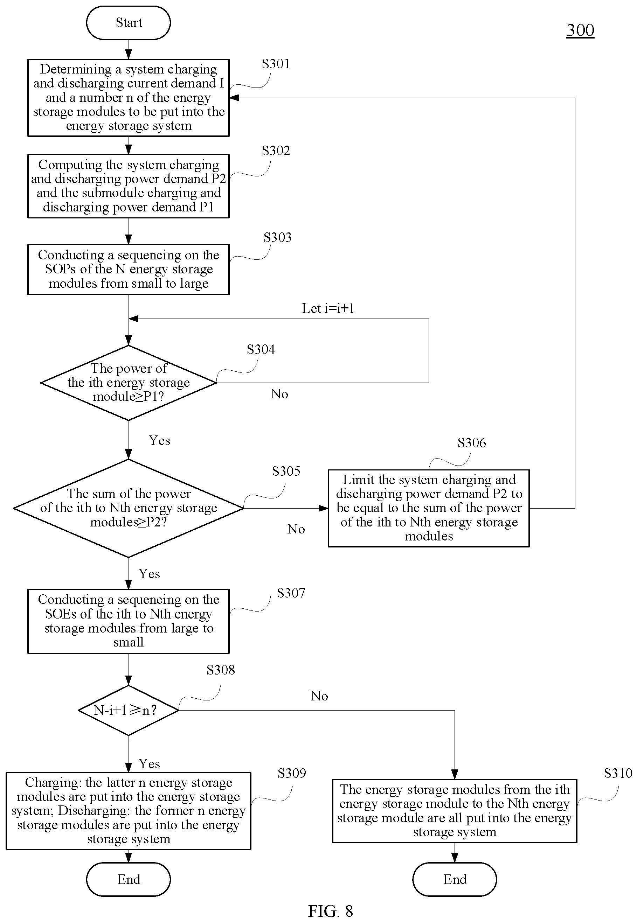

The control method of the energy storage system will be described in detail below in conjunction with FIG. 8 according to the embodiment of the present application, wherein the energy storage system comprises N energy storage modules connected in series, and N is a positive integer greater than 1. As shown in FIG. 8, the control method 300 may include a portion or all of the following steps:

S301, determining a system charging and discharging current demand I and a number n of the energy storage modules to be put into the energy storage system, wherein n is less than or equal to N;

S302, computing a submodule charging and discharging power demand P1 and a system charging and discharging power demand P2 according to the system charging and discharging current demand I and the number n of the energy storage modules to be put into the energy storage system determined in S301, wherein specifically, $P1=I*V_{nom}$ and $P2=n*I*V_{nom}$, wherein $V_{nom}$ is a rated voltage of a single energy storage module;

S303, collecting SOPs of the energy storage modules in real time and conducting a sequencing on the SOPs of the N energy storage modules from small to large, wherein SOP=table (temperature, SOC), i.e., the SOP is acquired by looking up the table of the temperature and the SOC.

S304, judging whether the power of each energy storage module is greater than or equal to P1 or not from ith=1 based on the sequencing in S303, going to a next step S305 if judging that the power of the ith energy storage module is greater than or equal to P1, and continuing to perform S304 as i=i+1 if judging that the power of the ith energy storage module is less than P1, wherein the power of the energy storage module is equal to a product of the SOP of the energy storage module and a rated power of the energy storage module,

S305, continuing to judge whether a sum of the power of (N-i+1) energy storage modules between an ith energy storage module and an Nth energy storage modules is greater than or equal to P2 or not, going to Step S307 if judging that the sum of the power of the (N-i+1) energy storage modules is greater than or equal to P2, and going to Step S306 if judging that the sum of the power of the (N-i+1) energy storage modules is less than P2;

S306, limiting P2 in a next balance control process to be the sum of the power of the (N-i+1) energy storage modules, and using this as a basis of Step S301 in the next balance control process;

S307, further conducting a sequencing on SOEs of the (N-i+1) energy storage modules from large to small, wherein in the charging process, SOE=(1-SOC)*SOH*$C_{nom}$*$V_{nom}$; in the discharging process, SOE=SOC*SOH*$C_{nom}$*$V_{nom}$, $C_{nom}$ is a rated capacity of the energy storage module, and $V_{nom}$ is a rated voltage of the energy storage module;

S308, further judging whether N-i+1≥n can stand or not, executing Step S309 if N-i+1≥n can stand, and executing Step S310 if N-i+1≥n cannot stand;

S309, based on the sequencing in S307, putting latter n energy storage modules into the energy storage system in a charging state, and putting former n energy storage modules into the energy storage system in a discharging state; and

S310, putting the ith to Nth energy storage modules into the energy storage system.

It should be noted that "between" in the control method according to the embodiments of the present application includes end points.

It should be understood that in the embodiments of the present application, the serial numbers of the processes do not mean the execution sequence, and the execution sequence of each process should be determined by its function and internal logic, and should not constitute any limitation on the implementation processes of the embodiments of the present application. For example, Step S07 may be executed after Step S308.

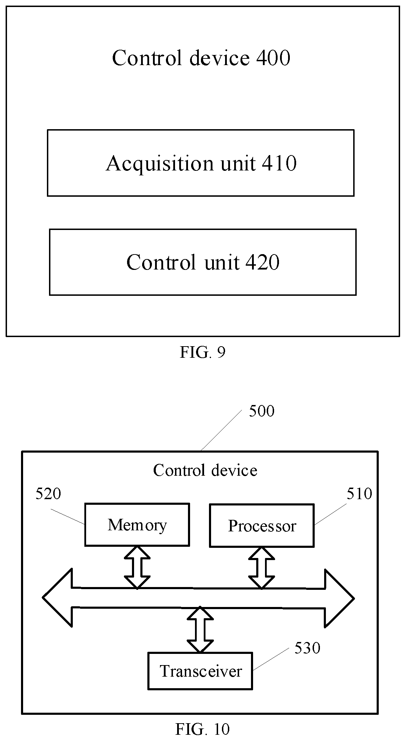

The control method of the embodiment of the present application has been described in detail above, and the control device of the energy storage system will be described in detail below in conjunction with FIG. 9 and FIG. 10 according to the embodiment of the present application. The technical features described according to the method embodiments are suitable for device embodiments below.

FIG. 9 is a schematic block diagram of a control device 400 of an energy storage system according to an embodiment of the present application, wherein the energy storage system comprises N energy storage modules connected in series, and N is a positive integer greater than 1. As shown in FIG. 9, the control device may include a portion or all of the following content:

an acquisition unit 410 configured to acquire a first parameter of each energy storage module among the N energy storage modules, the first parameter being a parameter related to the power; and
a control unit 420 configured to conduct balance control on the energy storage system according to the first parameter of each energy storage module.

Optionally, in the embodiment of the present application, the control unit is specifically configured to control M target energy storage modules among the N energy storage modules to be put into the energy storage system according to the first parameter of each energy storage module, the power of the M target energy storage modules meets a charging and discharging power demand, and M is a positive integer.

Optionally, in the embodiment of the present application, the power of the M target energy storage modules meets the charging and discharging power demand, which comprises: the power of each energy storage module among the M target energy storage modules meets a submodule charging and discharging power demand P1, and/or a sum of the power of the M target energy storage modules meets a system charging and discharging power demand P2.

Optionally, in the embodiment of the present application, the first parameter comprises a state of power SOP, and the control unit specifically comprises: a determination subunit configured to determine the K candidate energy storage modules from the N energy storage modules according to the SOP of each energy storage module, the power of the K candidate energy storage modules meeting a charging and discharging power demand, and K being a positive integer, and determine the M target energy storage modules from the K candidate energy storage modules; and a control subunit configured to control the M target energy storage modules to be put into the energy storage system.

Optionally, in the embodiment of the present application, the control device also comprises: a determination unit configured to determine the number n of the energy storage modules to be put into the energy storage system, n being a positive integer less than or equal to N; the determination subunit is specifically configured to determine the M target energy storage modules from the K candidate energy storage modules according to the number n of the energy storage modules to be put into the energy storage system.

Optionally, in the embodiment of the present application, the determination subunit is specifically configured to determine the M target energy storage modules from the K candidate energy storage modules based on a state of energy SOE of each energy storage module among the K candidate energy storage modules in the case that n is less than K, wherein the SOE is a parameter related to a state of health SOH.

Optionally, in the embodiment of the present application, the SOE is a parameter related to the SOH and a state of charge SOC.

Optionally, in the embodiment of the present application, the determination subunit is specifically configured to determine n energy storage modules with a minimum SOE among the K candidate energy storage modules to be the M target energy storage modules in the case that n is less than K and the energy storage system is in a charging state, or determine n energy storage modules with a maximum SOE among the K candidate energy storage modules to be the M target energy storage modules in the case that n is less than K and the energy storage system is in a discharging state.

Optionally, in the embodiment of the present application, the determination subunit is specifically configured to determine the K candidate energy storage modules to be the M target energy storage modules in the case that n is greater than or equal to K.

Optionally, in the embodiment of the present application, the determination subunit is specifically configured to: acquire a sequencing of the power of the N energy storage modules from small to large according to the SOP of each energy storage module; and determine ith to Nth energy storage modules to be the K candidate energy storage modules based on the sequencing in the case that the power of the ith energy storage module among the N energy storage modules is greater than or equal to a submodule charging and discharging power demand P1 and a sum of the power of $(N-i+1)$ energy storage modules from the ith energy storage module to the Nth energy storage module is greater than or equal to a system charging and discharging power demand P2, wherein i is a positive integer, and $1 \leq i \leq N$.

Optionally, in the embodiment of the present application, the power of each energy storage module is a product of the SOP of a corresponding energy storage module and the rated power of the corresponding energy storage module. All the energy storage modules among the N energy storage modules have the same rated voltage. The determination subunit is specifically configured to acquire a sequencing of the power of the N energy storage modules from small to large according to the sequencing of the SOPs of the N energy storage modules from small to large.

Optionally, in the embodiment of the present application, the control device also comprises a determination unit configured to determine a system charging and discharging current demand I and a number n of the energy storage modules to be put into the energy storage system, n being a positive integer less than or equal to N; and determine the submodule charging and discharging power demand P1 and the system charging and discharging power demand P2 according to the system charging and discharging current demand I and the number n of the energy storage modules to be put into the energy storage system.

Optionally, in the embodiment of the present application, the determination unit is specifically configured to determine the submodule charging and discharging power demand P1 and the system charging and discharging power demand P2 according to formulas below: $P1=I*V_{nom}$ and $P2=n*I*V_{nom}$; $V_{nom}$ is a rated voltage of a single energy storage module.

Optionally, in the embodiment of the present application, the determination unit is specifically configured to determine a system charging and discharging current demand $I_{j+1}$ and a number $n_{j+1}$ of the energy storage modules to be put into the energy storage system in the process of conducting (j+1)th balance control on the energy storage system according to a sum of the power of $(N-i+1)_j$ energy storage modules from an $i_j$th energy storage module to an $N_j$th energy storage module when the power of the $i_j$th energy storage module is greater than or equal to a submodule charging and discharging power demand $P1_j$ and a sum of the power of the $(N-i+1)_j$ energy storage modules is less than a system charging and discharging power demand $P2_j$ in the process of conducting jth balance control on the energy storage system, wherein the $i_j$th energy storage module

is the ith energy storage module determined in the process of conducting jth balance control on the energy storage system, $P1_j$ is the submodule charging and discharging power demand P1 determined in the process of conducting jth balance control on the energy storage system, the $N_j$th energy storage module is the Nth energy storage module determined in the process of conducting jth balance control on the energy storage system, the system charging and discharging power demand $P2_j$ is the system charging and discharging power demand P2 in the process of conducting jth balance control on the energy storage system, the $(N-i+1)_j$ energy storage modules are the (N-i+1) energy storage modules determined in the process of conducting jth balance control on the energy storage system, the system charging and discharging current demand $I_{j+1}$ is the system charging and discharging current demand I determined in the process of conducting (j+1)th balance control on the energy storage system, the number $n_{j+1}$ of the energy storage modules to be put into the energy storage system is the number n of the energy storage modules to be put into the energy storage system determined in the process of conducting (j+1)th balance control on the energy storage system, and j is a positive integer.

Optionally, in the embodiment of the present application, the SOE is determined based on formulas below: $SOE=(1-SOC)*SOH*C_{nom}*V_{nom}$ when the energy storage system is in a charging state; $SOE=SOC*SOH*C_{nom}*V_{nom}$ when the energy storage system is in a discharging state, wherein $C_{nom}$ is a rated capacity of a single energy storage module, and $V_{nom}$ is a rated voltage of the single energy storage module.

Optionally, in the embodiment of the present application, the acquisition unit is specifically configured to determine the SOP of each energy storage module according to a temperature and a state of charge SOC of each energy storage module.

Optionally, the embodiment of the present application also provides an energy storage system which comprises N energy storage modules connected in series and the control device 400 according to the embodiments. The control device is configured to conduct balance control on the N energy storage modules.

Optionally, the energy storage system may be a high-voltage direct-current direct-mounted energy storage system.

It should be understood that the above and other operations and/or functions of the modules in the control device 400 are for implementations of corresponding flows in the methods in FIG. 3 to FIG. 8, for brevity, it is not described again here.

FIG. 10 is a schematic block diagram of a control device 500 of an energy storage system according to an embodiment of the present application. As shown in FIG. 10, the control device 500 comprises a processor 510 and a memory 520, wherein the memory 520 is configured to store instructions, and the processor 510 is configured to read the instructions and perform the methods in the embodiments of the present application based on the instructions;
wherein the memory 520 may be an individual device independent of the processor 510 and may also be integrated into the processor 510.

Optionally, as shown in FIG. 10, the charging control device 500 may also comprise a transceiver 530. The processor 510 may control the transceiver 530 to communicate with other devices. Specifically, the transceiver may send information or data to other devices, or receive information or data sent by other devices.

The embodiment of the present application also provides a computer storage medium for storing a computer program. The computer program is configured to perform the foregoing methods according to the embodiments of the present application.

It should be understood that the processor may also be an integrated circuit chip and has a signal processing capability according to the embodiment of the present application. During the implementing process, the steps according to the method embodiments above may be completed through an integrated logic circuit of hardware in the processor or instructions in the form of software. The processor may be a general-purpose processor, a digital signal processor (DSP), an application specific integrated circuit (ASIC), a field programmable gate array (FPGA) or other programmable logic devices, discrete or transistor logic devices and discrete hardware components. The processor may implement or execute the methods, steps and logic block diagrams disclosed according to the embodiments of the present application. The general-purpose processor may be a microprocessor or may also be any conventional processor, and so on. The steps of the method disclosed in conjunction with the embodiments of the present application may be embodied directly in a hardware decoding processor to be executed and completed or in a combination of hardware and software modules in the decoding processor to be executed and completed. The software modules may be located in a mature storage medium of the field, such as RAM, flash memory, ROM, a programmable ROM or an electrically erasable programmable memory and a register. The storage medium is located in the memory, and the processor reads information in the memory and is in conjunction with hardware thereof to complete the steps of the methods.

It should be understood that the memory may be a volatile memory or a non-volatile memory, or may include both the volatile memory and the non-volatile memory according to the embodiments of the present application. The non-volatile memory may be a read-only memory (ROM), a programmable ROM (PROM), an erasable PROM (EPROM), an electrically EPROM (EEPROM) or a flash memory. The volatile memory may be a random-access memory (RAM) and serves as an external cache. Through illustrative but not limiting explanations, many forms of RAMs are available, such as a static RAM (SRAM), a dynamic RAM (DRAM), a synchronous DRAM (SDRAM), a double-data-rate SDRAM (DDR SDRAM), an enhanced SDRAM (ESDRAM), a synchlink DRAM (SLDRAM) and a direct rambus RAM (DR RAM). It should be noted that the memory of the system and methods described herein is intended to include but is not limited to these and any other suitable types of memories.

The embodiment of the present application also provides a computer-readable storage medium for storing a computer program.

Optionally, the computer-readable storage medium may be applied to the charging control device according to the embodiment of the present application. The computer program enables a computer to perform corresponding flows implemented by the charging control device in the methods according to the embodiments of the present application, and for brevity, it is not described here.

The embodiment of the present application also provides a computer program product which comprises computer program instructions.

Optionally, the computer program product may be applied to the charging control device according to the embodiment of the present application. The computer program instructions enable a computer to perform corresponding flows implemented by the charging control device in the methods according to the embodiments of the present application, and for brevity, it is not described here.

The embodiment of the present application also provides a computer program.

Optionally, the computer program may be applied to the charging control device according to the embodiment of the present application. When run in a computer, the computer program enables the computer to perform corresponding flows implemented by the charging control device in the methods according to the embodiments of the present application, and for brevity, it is not described here.

Those of ordinary skill in the art may be aware that units, algorithms and steps in the examples described in conjunction with the embodiments of the present application disclosed herein can be realized through electronic hardware or a combination of computer software and electronic hardware. Whether these functions are performed in the form of hardware or software depends on specific application and design constraint conditions of the technical scheme. Skilled artisans may implement the described functions of each specific application in different ways, but such implementation should not be interpreted as a departure from the scope of the present application.

Those skilled in the art can clearly understand that, for the convenience and brevity of description, the specific working process of the system, devices and units described above may refer to the corresponding process in the foregoing method embodiments, which will not be repeated here.

In the several embodiments provided in the present application, it should be understood that the disclosed system, devices and methods may be implemented in other manners. For example, the device embodiments described above are only illustrative. For example, the division of units is only a logical function division. In actual implementation, there may be other division methods. For example, multiple units or components may be combined or integrated into another system, or some features may be omitted, or not implemented. In addition, the displayed or discussed mutual coupling or direct coupling or communication connection may be indirect coupling or communication connection through some interfaces, devices or units, and may be in electrical, mechanical or other forms.

The units described as separate components may or may not be physically separated, and the components displayed as units may or may not be physical units, i.e., they may be located in one place, or they may be distributed on multiple network units. Some or all of the units may be selected according to actual needs to achieve the purposes of the schemes of the embodiments.

In addition, the functional units in the various embodiments of the present application may be integrated into one processing unit, or each unit may exist alone physically, or two or more units may be integrated into one unit.

The functions, if implemented in the form of software functional units and sold or used as separate products, may be stored in a computer-readable storage medium. Based on such understanding, the technical solution of the present application, which is essential or contributes to the prior art, or a part of the technical solution, may be embodied in the form of a computer software product, which is stored in a storage medium, including a plurality of instructions used to cause a computer device (which may be a personal computer, a server, or a network device, etc.) to perform all or part of the steps of the methods described in the embodiments of the present application. The foregoing storage medium includes various mediums capable of storing program codes, such as a U disk, a mobile hard disk, a ROM, a RAM, a magnetic disk or an optical disk.

The above is only the specific implementations of the present application, but the scope of the present application is not limited thereto, and any person skilled in the art can easily think of changes or substitutions within the technical scope of the present application. It should be covered by the scope of the present application. Thus, the protection scope of the present application should be determined by the scope of the claims.

**Claims**

1. A control method of an energy storage system, wherein the energy storage system comprises N energy storage modules connected in series, N is a positive integer greater than 1, and the control method comprises:

> acquiring a first parameter of each energy storage module among the N energy storage modules, the first parameter being related to power; and
> conducting balance control on the energy storage system according to the first parameter of each energy storage module.

2. The control method according to claim 1, wherein the conducting balance control on the energy storage system according to the first parameter of each energy storage module comprises:
controlling M target energy storage modules among the N energy storage modules to put into the energy storage system according to the first parameter of each energy storage module, wherein power of the M target energy storage modules meets a charging and discharging power demand, and M is a positive integer and is less than or equal to N.

3. The control method according to claim 2, wherein the power of the M target energy storage modules meets the charging and discharging power demand, which comprises that:

> power of each energy storage module among the M target energy storage modules meets a submodule charging and discharging power demand P1; and/or
> a sum of the power of the M target energy storage modules meets a system charging and discharging power demand P2.

4. The control method according to claim 2 or claim 3, wherein the first parameter comprises a state of power, SOP, and the controlling the M target energy storage modules among the N energy storage modules to put into the energy storage system comprises:

> determining K candidate energy storage modules from the N energy storage modules according to the SOP of each energy storage module, wherein power of the K candidate energy storage modules meets a charging and discharging power demand, and K is a positive integer and is less than or equal to N;
> determining the M target energy storage modules from the K candidate energy storage modules, M being less than or equal to K; and
> controlling the M target energy storage modules to put into the energy storage system.

5. The control method according to claim 4, further comprising:

determining the number n of the energy storage modules to be put into the energy storage system, n being a positive integer less than or equal to N;
the determining the M target energy storage modules from the K candidate energy storage modules comprising:
determining the M target energy storage modules from the K candidate energy storage modules according to the number n of the energy storage modules to be put into the energy storage system.

6. The control method according to claim 5, wherein the determining the M target energy storage modules from the K candidate energy storage modules according to the number n of the energy storage modules to be put into the energy storage system comprises:
in a case that n is less than K, based on a state of energy SOE of each energy storage module among the K candidate energy storage modules, determining the M target energy storage modules from the K candidate energy storage modules, wherein the SOE is a parameter related to a state of health SOH.

7. The control method according to claim 6, wherein the SOE is a parameter related to the SOH and a state of charge SOC.

8. The control method according to claim 6 or claim 7, wherein in the case that n is less than K, based on the state of energy SOE of each energy storage module among the K candidate energy storage modules, the determining the M target energy storage modules from the K candidate energy storage modules comprises:

> in a case that n is less than K and the energy storage system is in a charging state, determining the n energy storage modules with a minimum SOE among the K candidate energy storage modules to be the M target energy storage modules; or
> in a case that n is less than K and the energy storage system is in a discharging state, determining the n energy storage modules with a maximum SOE among the K candidate energy storage modules to be the M target energy storage modules.

9. The control method according to claim 5, wherein the determining the M target energy storage modules from the K candidate energy storage modules according to the number n of the energy storage modules to be put into the energy storage system comprises:
determining the K candidate energy storage modules to be the M target energy storage modules in a case that n is greater than or equal to K.

10. The control method according to any one of claims 4 to 9, wherein the determining K candidate energy storage modules from the N energy storage modules according to the SOP of each energy storage module comprises:

acquiring a sequencing of power of the N energy storage modules from small to large according to the SOP of each energy storage module; and based on the sequencing, in a case that the power of an ith energy storage module among the N energy storage modules is greater than or equal to the submodule charging and discharging power demand P1 and a sum of the power of (N-i+1) energy storage modules from the ith energy storage module to an Nth energy storage module is greater than or equal to the system charging and discharging power demand P2, determining the ith to Nth energy storage modules to be the K candidate energy storage modules, wherein i is a positive integer, and $1 \leq i \leq N$.

11. The control method according to claim 10, wherein the power of each energy storage module is a product of the SOP of the corresponding energy storage module and a rated power of the corresponding energy storage module, all the energy storage modules among the N energy storage modules have the same rated power, and the acquiring the sequencing of the power of the N energy storage modules from small to large according to the SOP of each energy storage module comprises:
acquiring the sequencing of the power of the N energy storage modules from small to large according to the sequencing of the SOPs of the N energy storage modules from small to large.

12. The method according to claim 10 or claim 11, further comprising:

determining a system charging and discharging current demand I and the number n of the energy storage modules to be put into the energy storage system, n being a positive integer less than or equal to N; and
determining the submodule charging and discharging power demand P1 and the system charging and discharging power demand P2 according to the system charging and discharging current demand I and the number n of the energy storage modules to be put into the energy storage system.

13. The control method according to claim 12, wherein the determining the submodule charging and discharging power demand P1 and the system charging and discharging power demand P2 according to the system charging and discharging current demand I and the number n of the energy storage modules to be put into the energy storage system comprises: determining the submodule charging and discharging power demand P1 and the system

$$P1=I*V_{nom}, \text{ and } P2=n*I*V_{nom},$$

charging and discharging power demand P2 according to formulas below: , wherein $V_{nom}$ is a rated voltage of a single energy storage module.

14. The control method according to claim 12 or claim 13, wherein the determining the system charging and discharging current demand I and the number n of the energy storage modules to be put into the energy storage system comprises:
according to a sum of the power of $(N-i+1)_j$ energy storage modules from an $i_j$th energy storage module to an $N_j$th energy storage module when power of the $i_j$th energy storage module is greater than or equal to a submodule charging and discharging power demand $P1_j$ and the sum of the power of the $(N-i+1)_j$ energy storage modules is less than a system charging and discharging power demand $P2_j$ in a process of conducting a jth balance control on the energy storage system, determining a system charging and discharging current demand $I_{j+1}$ and the number $n_{j+1}$ of the energy storage modules to be put into the energy storage system in a process of conducting a (j+1)th balance control on the energy storage system, wherein:

the $i_j$th energy storage module is the ith energy storage module determined in the process of conducting the jth balance control on the energy storage system;
the $P1_j$ is the submodule charging and discharging power demand P1 determined in the process of conducting the jth balance control on the energy storage system;
the $N_j$th energy storage module is the Nth energy storage module determined in the process of conducting the jth balance control on the energy storage system;
the system charging and discharging power demand $P2_j$ is the system charging and discharging power demand P2 in the process of conducting the jth balance control on the energy storage system;
the $(N-i+1)_j$ energy storage modules are the (N-i+1) energy storage modules determined in the process of conducting the jth balance control on the energy storage system;
the system charging and discharging current

demand $I_{j+1}$ is the system charging and discharging current demand I determined in the process of conducting the (j+1)th balance control on the energy storage system;

the number $n_{j+1}$ of the energy storage modules to be put into the energy storage system is the number n of the energy storage modules to be put into the energy storage system determined in the process of conducting the (j+1)th balance control on the energy storage system; and

j is a positive integer.

15. The control method according to any one of claims 6 to 8, wherein the SOE is determined based on following formulas:

when the energy storage system is in a charging state, $SOE=(1-SOC)*SOH*C_{nom}*V_{nom}$; and
when the energy storage system is in a discharging state, $SOE=SOC*SOH*C_{nom}*V_{nom}$,
wherein $C_{nom}$ is a rated capacity of the single energy storage module, and $V_{nom}$ is a rated voltage of the single energy storage module.

16. The control method according to any one of claims 4 to 15, wherein the acquiring the first parameter of each energy storage module among the N energy storage modules comprises:
determining the SOP of each energy storage module according to a temperature and a state of charge SOC of each energy storage module.

17. A control device of an energy storage system, wherein the energy storage system comprises N energy storage modules connected in series, N is a positive integer greater than 1, and the control device comprises:

an acquisition unit configured to acquire a first parameter of each energy storage module among the N energy storage modules, the first parameter being related to power; and
a control unit configured to conduct a balance control on the energy storage system according to the first parameter of each energy storage module.

18. The control device according to claim 17, wherein the control unit is specifically configured to:
control M target energy storage modules among the N energy storage modules to put into the energy storage system according to the first parameter of each energy storage module, power of the M target energy storage modules meeting a charging and discharging power demand, and M being a positive integer.

19. The control device according to claim 18, wherein the power of the M target energy storage modules meets the charging and discharging power demand, which comprises that:

power of each energy storage module among the M target energy storage modules meets a submodule charging and discharging power demand P1, and/or
a sum of the power of the M target energy storage modules meets a system charging and discharging power demand P2.

20. The control device according to claim 18 or claim 19, wherein the first parameter comprises a state of power, SOP, and the control unit specifically comprises:

a determination subunit configured to determine K candidate energy storage modules from the N energy storage modules according to the SOP of each energy storage module and determine M target energy storage modules from the K candidate energy storage modules, wherein power of the K candidate energy storage modules meets the charging and discharging power demand, and K is a positive integer; and
a control subunit configured to control the M target energy storage modules to put into the energy storage system.

21. The control device according to claim 20, further comprising:

a determination unit configured to determine the number n of the energy storage modules to be put into the energy storage system, n being a positive integer less than or equal to N;
wherein the determination subunit is specifically configured to:
determine the M target energy storage modules from the K candidate energy storage modules according to the number n of the energy storage modules to be put into the energy storage system.

22. The control device according to claim 21, wherein the determination subunit is specifically configured to:
in a case that n is less than K, based on a state of energy SOE of each energy storage module among the K candidate energy storage modules, determine the M target energy storage modules from the K candidate energy storage modules, wherein the SOE is a parameter related to a state of health SOH.

23. The control device according to claim 22, wherein the SOE is a parameter related to the SOH and a state of charge SOC.

**24.** The control device according to claim 22 or claim 23, wherein the determination subunit is specifically configured to:

in a case that n is less than K and the energy storage system is in a charging state, determine the n energy storage modules with a minimum SOE among the K candidate energy storage modules to be the M target energy storage modules; or
in a case that n is less than K and the energy storage system is in a discharging state, determine the n energy storage modules with a maximum SOE among the K candidate energy storage modules to be the M target energy storage modules.

**25.** The control device according to claim 21, wherein the determination subunit is specifically configured to:
determine the K candidate energy storage modules to be the M target energy storage modules in a case that n is greater than or equal to K.

**26.** The control device according to any one of claims 20 to 25, wherein the determination subunit is specifically configured to:

acquire a sequencing of the power of the N energy storage modules from small to large according to the SOP of each energy storage module; and
based on the sequencing, in a case that the power of an ith energy storage module among the N energy storage modules is greater than or equal to the submodule charging and discharging power demand P1 and a sum of the power of (N-i+1) energy storage modules from the ith energy storage module to an Nth energy storage module is greater than or equal to the system charging and discharging power demand P2, determining the ith to Nth energy storage modules to be the K candidate energy storage modules, wherein i is a positive integer, and $1 \leq i \leq N$.

**27.** The control device according to claim 26, wherein the power of each energy storage module is a product of the SOP of the corresponding energy storage module and a rated power of the corresponding energy storage module, all the energy storage modules among the N energy storage modules have the same rated power, and the determination subunit is specifically configured to:
acquire the sequencing of the power of the N energy storage modules from small to large according to the sequencing of the SOPs of the N energy storage modules from small to large.

**28.** The control device according to claim 26 or claim 27, further comprising:
a determination unit configured to:

determine a system charging and discharging current demand I and the number n of the energy storage modules to be put into the energy storage system, n being a positive integer less than or equal to N; and
determine the submodule charging and discharging power demand P1 and the system charging and discharging power demand P2 according to the system charging and discharging current demand I and the number n of the energy storage modules to be put into the energy storage system.

**29.** The control device according to claim 282, wherein the determination unit is specifically configured to:
determine the submodule charging and discharging power demand P1 and the system charging and discharging power demand P2 according to formulas below:

$$P1 = I^* V_{nom}, \text{ and } P2 = n^* I^* V_{nom},$$

wherein $V_{nom}$ is a rated voltage of a single energy storage module.

**30.** The control device according to claim 28 or claim 29, wherein the determination unit is specifically configured to:
according to a sum of the power of $(N-i+1)_j$ energy storage modules from an $i_j$th energy storage module to an $N_j$th energy storage module when the power of the $i_j$th energy storage module is greater than or equal to a submodule charging and discharging power demand $P1_j$ and the sum of the power of the $(N-i+1)_j$ energy storage modules is less than a system charging and discharging power demand $P2_j$ in a process of conducting a jth balance control on the energy storage system, determining a system charging and discharging current demand $I_j+_1$ and the number $n_{j+1}$ of the energy storage modules to be put into the energy storage system in a process of conducting a (j+1)th balance control on the energy storage system, wherein:

the $i_j$th energy storage module is the ith energy storage module determined in the process of conducting the jth balance control on the energy storage system;
the $P1_j$ is the submodule charging and discharging power demand P1 determined in the process of conducting the jth balance control on the energy storage system;
the $N_j$th energy storage module is the Nth energy storage module determined in the process of conducting the jth balance control on the energy storage system;

the system charging and discharging power demand $P2_j$ is the system charging and discharging power demand $P2$ in the process of conducting the jth balance control on the energy storage system;

the $(N-i+1)_j$ energy storage modules are the $(N-i+1)$ energy storage modules determined in the process of conducting the jth balance control on the energy storage system;

the system charging and discharging current demand $I_{j+1}$ is the system charging and discharging current demand $I$ determined in the process of conducting the $(j+1)$th balance control on the energy storage system;

the number $n_{j+1}$ of the energy storage modules to be put into the energy storage system is the number $n$ of the energy storage modules to be put into the energy storage system determined in the process of conducting the $(j+1)$th balance control on the energy storage system; and

j is a positive integer.

31. The control device according to any one of claims 22 to 24, wherein the SOE is determined based on following formulas:

when the energy storage system is in a charging state, $SOE=(1-SOC)*SOH*C_{nom}*V_{nom}$; and when the energy storage system is in a discharging state, $SOE=SOC*SOH*C_{nom}*V_{nom}$, wherein $C_{nom}$ is a rated capacity of the single energy storage module, and $V_{nom}$ is a rated voltage of the single energy storage module.

32. The control device according to any one of claims 20 to 31, wherein the acquisition unit is specifically configured to:
determine the SOP of each energy storage module according to a temperature and a state of charge SOC of each energy storage module.

33. An energy storage system, comprising N energy storage modules connected in series and the control device according to any one of claims 16 to 32, wherein N is a positive integer greater than 1, and the control device is configured to conduct a balance control on the N Energy storage modules.

34. The energy storage system according to claim 33, being a high-voltage direct-current direct-mounted energy storage system.

35. A control device of an energy storage system, wherein the energy storage system comprises N energy storage modules connected in series, wherein N is a positive integer greater than 1, and the control device comprises a memory and a processor, the memory is configured to store instructions, and the processor is configured to read the instructions and perform the method according to any one of claims 1 to 16 according to the instructions.

36. A chip, comprising a processor configured to call a computer program from a memory and run the computer program to enable a device provided with the chip to perform the method according to any one of claims 1 to 16.

37. A computer program, which enables a computer to perform the method according to any one of claims 1 to 32.

38. A computer-readable storage medium, used for storing a computer program which enables a computer to perform the method according to any one of claims 1 to 16.

39. A computer program product, comprising a computer program instruction which enables a computer to perform the method according to any one of claims 1 to 16.

120

121_1

121_2

121_N-1

121_N

FIG. 1

121

1211

1212

FIG. 2a

121

1211

1212

FIG. 2b

20

| Acquiring a first parameter of each energy storage module among the N energy storage modules, the first parameter being a parameter related to power | S21 |

| Conducting balance control on the energy storage system according to the first parameter of each energy storage module | S22 |

FIG. 3

S22

Controlling M target energy storage modules among the N energy storage modules to be put into the energy storage system according to the first parameter of each energy storage module, the power of the M target energy storage modules meeting a charging and discharging power demand

S221

FIG. 4

S221

Determining K candidate energy storage modules from the N energy storage modules according to the SOP of each energy storage module, the power of the K candidate energy storage modules meeting the charging and discharging power demand

S2211

Determining the M target energy storage modules from the K candidate energy storage modules

S2212

Controlling the M target energy storage modules to be put into the energy storage system

S2213

FIG. 5

S2212

S231 — Determining the M target energy storage modules from the K candidate energy storage modules according to the number n of the energy storage modules to be put into the energy storage system

S2311

Determining n energy storage modules among the K candidate energy storage modules to be the M target energy storage modules in the case that K is greater than n

S2323

Determining the K candidate energy storage modules to be the M target energy storage modules in the case that K is less than or equal to n

Determining the M target energy storage modules from the K candidate energy storage modules based on a state of energy of each energy storage module among the K candidate energy storage modules in the case that n is less than K

S241

S2411

Determining n energy storage modules with a minimum SOE among the K candidate energy storage modules to be the M target energy storage modules in the case that n is less than K and the energy storage system is in a charging state

S2412

Determining n energy storage modules with a maximum SOE among the K candidate energy storage modules to be the M target energy storage modules in the case that n is less than K and the energy storage system is in a discharging state

FIG. 6

S2211

| Acquiring a sequencing of the power of the N energy storage modules from small to large according to the SOP of each energy storage module | S251 |

Based on the sequencing, in the case that the power of an ith energy storage module among the N energy storage modules is greater than or equal to the submodule charging and discharging power demand P1 and the sum of the power of the 1st to Nth energy storage modules is greater than or equal to the system charging and discharging power demand P2, determining the ith to Nth energy storage modules to be the K candidate energy storage modules

S252

FIG. 7

Start

300

Determining a system charging
and discharging current demand I
and a number n of the energy
storage modules to be put into the
energy storage system

S301

Computing the system charging
and discharging power demand P2
and the submodule charging and
discharging power demand P1

S302

Conducting a sequencing on the
SOPs of the N energy storage
modules from small to large

S303

Let i=i+1

The power of
the ith energy storage
module≥P1?

S304

No

Yes

S306

The sum of the power
of the ith to Nth energy storage
modules≥P2?

S305

No

Limit the system charging and
discharging power demand P2 to
be equal to the sum of the power
of the ith to Nth energy storage
modules

Yes

Conducting a sequencing on the
SOEs of the ith to Nth energy
storage modules from large to
small

S307

N-i+1≥n?

S308

No

Yes

Charging: the latter n energy storage
modules are put into the energy storage
system; Discharging: the former n energy
storage modules are put into the energy
storage system

S309

The energy storage modules from the ith
energy storage module to the Nth energy
storage module are all put into the energy
storage system

S310

End

End

FIG. 8

Control device 400

Acquisition unit 410

Control unit 420

FIG. 9

500

Control device

520

Memory

510

Processor

530

Transceiver

FIG. 10

<div align="center">

**INTERNATIONAL SEARCH REPORT**

</div>

| | International application No. |
|---|---|
| | **PCT/CN2022/098708** |

| **A.** | **CLASSIFICATION OF SUBJECT MATTER** |
|---|---|
| | H02J 7/00(2006.01)i;  H02J 3/32(2006.01)i |
| | |
| | According to International Patent Classification (IPC) or to both national classification and IPC |

| **B.** | **FIELDS SEARCHED** |
|---|---|

Minimum documentation searched (classification system followed by classification symbols)
>   H02J

Documentation searched other than minimum documentation to the extent that such documents are included in the fields searched

Electronic data base consulted during the international search (name of data base and, where practicable, search terms used)
>   CNABS; CNTXT; CNKI; VEN; USTXT; WOTXT; EPTXT: 宁德时代新能源科技股份有限公司, 储能, 电池, 切出, 切除, 切入, 投入, 功率, 荷电状态, 串联, 均衡, 一致性, 排序, SOP, SOC, SOH, battery, cell, energy, storage, series, power, input, equalization

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 110048487 A (TSINGHUA UNIVERSITY et al.) 23 July 2019 (2019-07-23) description, paragraphs [0002]-[0102], and figures 1-3 | 1-39 |
| X | CN 111756058 A (BYD CO., LTD.) 09 October 2020 (2020-10-09) description, paragraphs [0002]-[0133], and figures 1-8 | 1-39 |
| X | CN 113629822 A (SUNGROW POWER SUPPLY CO., LTD.) 09 November 2021 (2021-11-09) description, paragraphs [0002]-[0104], and figures 1a-6b | 1-39 |
| A | CN 114268155 A (HANGZHOU DIANZI UNIVERSITY) 01 April 2022 (2022-04-01) entire document | 1-39 |
| A | CN 114498824 A (GUONENG XINKONG INTERNET TECHNOLOGY CO., LTD.) 13 May 2022 (2022-05-13) entire document | 1-39 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 December 2022** | **16 January 2023** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/098708**

| Patent document cited in search report | | | Publication date (day/month/year) | Patent family member(s) | | | Publication date (day/month/year) |
|---|---|---|---|---|---|---|---|
| CN | 110048487 | A | 23 July 2019 | CN | 110048487 | B | 13 April 2021 |
| CN | 111756058 | A | 09 October 2020 | CN | 111756058 | B | 09 December 2022 |
| CN | 113629822 | A | 09 November 2021 | None | | | |
| CN | 114268155 | A | 01 April 2022 | None | | | |
| CN | 114498824 | A | 13 May 2022 | None | | | |

Form PCT/ISA/210 (patent family annex) (January 2015)